# EUROPÄISCHE PATENTSCHRIFT

(11) **EP 1 426 976 B1**
(45) Veröffentlichungstag und Bekanntmachung des Hinweises auf die Patenterteilung: **23.12.2009**
(21) Anmeldenummer: 02751927.1
(22) Anmeldetag: 17.07.2002
(51) Int. Cl.: G21B 1/00

(54) **ENERGIEERZEUGUNGSEINRICHTUNG**
POWER PRODUCING DEVICE
DISPOSITIF DE PRODUCTION D'ENERGIE

(30) Priorität: 23.08.2001 RU 2001123463
(43) Veröffentlichungstag der Anmeldung: 09.06.2004
(73) Patentinhaber: Kirkinskii, Vitalii Alekseevitch, Novosibirsk, 630090 (RU); Khmelnikov, Aleksandr Ilyitch, 630128 Novosibirsk (RU); Vatajitsyn, Andrei Ivanovitch, Moskovsky obl. 143088 (RU)
(72) Erfinder: Kirkinskii, Vitalii Alekseevitch, Novosibirsk, 630090 (RU)
(74) Vertreter: Jeck, Anton
(86) Internationale Anmeldenummer: PCT/RU2002/000336
(87) Internationale Veröffentlichungsnummer: WO 2003/019576

(56) Entgegenhaltungen:
- WO-A1-01/29844
- WO-A1-97/20318
- WO-A1-97/20320
- GB-A- 2 278 491
- RU-C1- 2 056 656
- RU-C1- 2 145 123
- US-A- 5 942 206

## Beschreibung

Die Erfindung betrifft eine Anlage zur Energieerzeugung, die einen hermetisch abschließenden Reaktor mit einem Arbeitsstoff, weicher zu reversiblen, isostrukturellen Phasenumwandlungen mit Veränderung des Deuteriumgehalts geeignet ist, und die ein System zur Gasdruck-Erzeugung, -messung und -regelung, ein System zur Erwärmung und Temperaturregelung und ein System zur Übertragung und Nutzung der freigesetzten Wärme aufweist.

Bekannt geworden sind Vorrichtungen für die Energieerzeugung sowie für die Gewinnung von Tritium, Helium und freien Neutronen [1], [2]. Sie beruhen auf den Kernreaktionen von schweren Wasserstoff-Isotopen mit der Freisetzung von Helium und Tritium in den Kristallstrukturen von Deuteriden, einiger Metalle und auf deren Oberfläche bei einigen physikalischchemischen Prozessen. Experimentelle Zeugnisse für solche Kernreaktionen und theoretische Hypothesen über deren Mechanismen sind in vielen (mehr als tausend) Publikationen veröffentlicht (Verweisungen darauf und auf frühere Übersichten siehe in [3] und [4]) des auf die Beschreibung folgenden Literaturverzeichnisses. Die theoretische Analyse in [1], [2], [3], [4] und [5] zeigt, dass die Geschwindigkeit solcher Reaktionen bei den isostrukturellen Phasenumwandlungen der Metalle - Deuteride, die sich bei der Veränderung des Deuteriumgehalts vollziehen, zunehmen soll. Bei den Verfahren und Anlagen, die in [1] und [2] angemeldet sind, wird diese Erscheinung benutzt.

Die erste Vorrichtung, die in [1] und [2] beschrieben ist, schließt folgende Bestandteile ein:
einen hermetisch abgeschlossenen Behälter-Reaktor, in dem der Arbeitsstoff (Metall) eingelegt wird, der den isostrukturellen Phasenumwandlungen bei Temperatur- oder Druckveränderungen von gasförmigem Deuterium unterworfen wird;
ein System zur Regelung und Messung des Gasdrucks, das aus einer Hochdruckrohrleitung, einem Flüssigkeits- und Gasverteiler, einem Manometer, einer hydraulischen Pumpe, einer Vakuumpumpe, einem Ballon mit komprimiertem gasförmigem Deuterium und Ventilen besteht;
ein System zur Erwärmung und Temperaturregelung, das einen Widerstandserhitzer oder einen Ofen zur Erwärmung durch Hochfrequenzströme einschließt;
einen Temperaturregler und
ein System zur Übertragung und Benutzung von freigesetzter Wärme, das aus einem Kühler oder Wärmeaustauscher besteht, der in Form einer hohlen Spirale mit durchlaufender Flüssigkeit bzw. eines Gefäßes mit durchlaufendem Wärmeträger ausgeführt ist.

Diese Vorrichtung hat folgende Nachteile:
1. Da notwendige Bedingungen für die Durchführung des Kernprozesses, bei denen die Energie freigesetzt wird, die zyklische Erwärmung und Abkühlung des Reaktors mit dem Arbeitsstoff sind, hat die Desorption von Deuterium bei der Temperaturerhöhung einen Druckanstieg der Gasphase und eine Verlangsamung der Phasenumwandlung von Deuterid zur Folge. Infolgedessen wird die Effizienz der Energieerzeugung verringert.
2. Das Material des Reaktor-Behälters wird während des Arbeitsverlaufs und der Wasserstoffdiffusion brüchig, was auch zu einer Lahmlegung des Reaktors führen kann. Eine Explosion unter hohem Gasdruck führt zum Verlust des kostspieligen Arbeitsstoffs und der Gesamtanlage Sie ist für das Bedienungspersonal gefährlich.
3. Die Anwendung einer hydraulischen Pumpe und eines Separatohrs zur Trennung der Flüssigkeit und des Gases macht die Anlage komplizierter und macht den Betrieb unzuverlässig.
4. Die Elektroenergie wird nicht effektiv ausgenutzt, da ein erheblicher Wärmeanteil, der von der Heizvorrichtung erzeugt wird, in das umgebende Medium zerstreut wird.

Die zweite Vorrichtung, die auch in [1] und [2] angeführt ist und als Prototyp der vorliegenden Erfindung ausgewählt worden ist, besteht aus zwei hermetisch abgeschlossenen Behältern (zwei Reaktoren), die mit Verschlüssen versehen sind und miteinander durch eine Rohrleitung verbunden sind, sowie aus einem Wärmeerhitzer und Thermozellen, die in speziellen Reaktor-Zusatzräumen untergebracht sind, aus einem Temperaturregler, aus einem System zur Messung und Steuerung des Glasdrucks, zu dem eine Hochdruckrohrleftung, ein Druckgasballon, ein Druckmesser mit einem Separatohr und Ventile gehören, und auch aus einem Kühlungssystem bzw. einem Wärmeaustauscher in Form von hohlen Spiralen oder Behältern mit Flüssigkeit, die auf der Außenoberfläche der Reaktoren angebracht sind.

Die zweite Vorrichtung hat einen wichtigen Vorteil. Eine Temperatursteigerung führt nicht zu einer vergrößerten Druckerhöhung in dem zu erhitzenden Reaktorbehälter, da das bei der Desorption freigesetzte Deuterium im zweiten Reaktorbehälter absorbiert wird. Aber diese Vorrichtung hat auch ihre Mängel:
1. Die Anwendung von zwei Reaktorbehältern macht die Gesamtanlage komplizierter und teuer und vermindert ihre Zuverlässigkeit.
2. Die große Trägheit der Vorrichtung infolge der Verschlussmasse und des Vorhandenseins eines Verbindungsrohres verzögert die Desorption und Sorption vom Deuterium und eine dadurch bedingte Phasenumwandlung, wodurch die Geschwindigkeit der Energieerzeugung bei der Kernreaktion verringert wird.
3. Infolge bedeutender Wärmeverluste an das umgebende Medium wird die im Wärmeerhitzer umgesetzte Elektroenergie nicht effektiv ausgenutzt.
4. Das Durchdringen des Deuteriums zum Arbeitsstoff, besonders im Unterteil des Reaktorbehälters, wird erschwert, wodurch auch der Sorptionsverlauf verlangsamt und die Intensität der Energieerzeugung verringert wird.
5. In der Gesamtanlage ist eine Temperaturmessung unmittelbar in den Reaktorhöhlungen nicht vorgesehen, wodurch die Steuerung der Deuteriumsorption und -desorption in den Reaktoren verhindert wird.
6. Das bei der Desorption in einem Behälter entstehende Atomardeuterium kann bei Bewegungen durch das Verbindungsrohr rekombinieren, indem es D₂-Moleküle entstehen. Dann nimmt die nächste Desorption auf der Arbeitsstoffoberfläche eine zusätzliche Zeit in Anspruch, das den Diffusionsverlauf im Metall sowie auch die Phasenverwandlung und die Energieerzeugung verlangsamt.
7. Während der Benutzung des Reaktorbehälters dringt Deuterium unter hohen Temperaturen und unter Hochdruck in die stählernen Schalen des Reaktorbehälters aufgrund der Diffusion ein, wodurch eine Wasserstoffbrüchigkeit und eine Lahmlegung des Behälters erfolgen kann.

Aus der GB 2 278 491 A ist eine Vorrichtung zur Erzeugung von Wärme bekannt, bei der eine Magnetspulen-Einheit vorgesehen ist, die Wasserstoff absorbieren kann Dabei ist eine Wärme-Aufnahmeeinheit in der Nähe der Wärme-Übertragungsoberfläche der Magnetspulen-Einheit angeordnet, die die von der Magnetspulen-Einheit erzeugte Wärme als ausnutzbare Ausgangsenergie zur Verfügung stellt. Diese Vorrichtung weist eine in einem Behälter angeordnete mit Wechselstrom versorgte Kathode auf. Der Behälter nimmt schwer Wasser auf, das mit Hilfe einer Gleichstromquelle einer Elektrolyse unterzogen wird. Die Gleichstromquelle ist an der im Behälter untergebrachten Kathode und zusätzlichen in der Flüssigkeit angeordneten Anoden angeschaltet. Die Anoden bestehen aus Platin und die Kathode aus Palladium. Eine derartige Vorrichtung ist nicht mit einer Anlage zur Energieerzeugung gemäß der Erfindung zu vergleichen, auch wenn sie ähnliche Elemente aufweist.

Es ist Aufgabe der vorliegenden Erfindung, eine Anlage zu schaffen, die in Bezug auf die erzeugte Energiemenge und auf die Energieausnutzung effektiver ist, die Konstruktion vereinfacht, die Zuverlässigkeit verbessert und auch Bedingungen für eine Automatisierung schafft.

Die gestellte Aufgabe wird durch die Merkmale des Anspruchs 1 gelöst.

Die bekannte Vorrichtung zur Energieerzeugung (sowie auch zur Tritium- und Heliumerzeugung), die einen hermetisch abgeschlossenen Reaktor mit Arbeitsstoff, der für eine reversible, Isostrukturelle Phasenumwandlung mit Veränderung des Deuteriumgehalts geeignet ist, weist ein System zur Gasdruck-Erzeugung, -messung und - regelung und ein System zur Erwärmung und Temperaturregelung und ein System zur Übertragung und Nutzung der freigesetzten Wärme auf. Der Reaktor ist in Form von koaxialen Rohren ausgebildet, weil die den Arbeitsraum zwischen den Rohren mit dem sich darin befindlichen Arbeitsstoff hermetisch abschließen.

Wärmeerhitzer und Thermoquellen des Systems zur Erwärmung und Temperaturregelung sind an den Endteilen der Rohre des Reaktors außerhalb des Arbeitsraums angeordnet, mit der Möglichkeit zur Erzeugung eines umkehrbaren, längsläufigen Temperaturgradienten im Reaktor. Der Wärmetauscher des Systems zur Übertragung und Nutzung der Wärme im Reaktor ist an der zu den Wärmeerhitzern radial gegenüberliegenden Seiten angeordnet

Die genannten Merkmale der Anlage gemäß der Erfindung ermöglichen es gleichzeitig eine vielfache Desorption des Deuteriums im Arbeitsstoff des erhitzenden Reaktorteils und eine Sorption im gekühlten Reaktorteil durchzuführen und dafür den Prozess der Kernfusion zu verwenden. Der Prozess begleitet die isostrukturellen Phasenverwandlungen, indem eine Überschussenergie im Vergleich zu der verbrauchten Energie freigesetzt wird.

Weitere vorteilhafte Ausgestaltungen der Anlage sind den Unteransprüchen entnehmbar.

In Bezug auf den Reaktor sind folgende weiteren Merkmale wesentlich:
■ die Innenoberfläche der Rohre des Reaktors, die aus legiertem Stahl hergestellt sind, ist mit einer Schicht ausgekleidet. Die Schicht ist wasserstoffdicht, zum Beispiel durch eine elektrolytisch aufgetragene Silberschicht und/oder mit silbernen Buchsen, die fest an die Rohren anliegen;
■ die Verschlüsse des Reaktors verbinden die Rohre fest. Es ergeben sich spezielle Zusatzräume für die Aufnahme von Thermozellen. Im Arbeitsraum und auch an durchgehenden Stutzen besteht die Möglichkeit der Wiederladung für den Arbeitsstoffs und für die Verbindung mit das Mess- und Regelungssystem des Gasdrucks;
■ das innere Rohr des Reaktors hat ein Sackende mit einer Stirnfläche, wobei der Verschluss mit einer Abdichtung und mit einer durchgehenden Verschlussplatte über ein Gewinde am äußeren Rohr festgeschraubt ist;
■ der Reaktor weist eine akustische Verbindung mit einem Generator für Überschallschwingungen auf.

Das Wesen der vorgeschlagenen Vorrichtung besteht in der Erhöhung ihrer Beständigkeit in Bezug auf die Deuteriumwirkung, in der Auskleidung ihrer inneren Oberfläche mit einer Schicht, die im Vergleich zum Reaktorbaustoff wasserstoffdichter ist.

Zudem in einer Temperaturmessung unmittelbar im Arbeitsraum in speziellen Zusatzräumen, in die Messthermozellen eingeführt sind. Sowie auch in der Erhöhung der Deuteriumbewegung im Arbeitsstoff durch eine Verbindung des Reaktors zur Quelle der Überschallschwingungen.

Das Verhältnis der Rohrlänge des Reaktors und der Rohrquerschnitte werden vom technischen Komfort bestimmt. Im zentralen Teil des Reaktors kann eine Trennwand aus gasdichtem Material einrichten, z. B. aus poriger Keramik aus Alumlnium-Oxyd.

In Bezug auf den Arbeitsstoff sind folgende Merkmale wichtig:
■ auf das innere Rohr des Reaktors werden mehrere Schichten einer Folie aufgewickeit, z. B. aus Kupfer oder Silber. Auf der Folie ist der Arbeitsstoff als Film mit einer Stärke von 1 nm bis 100 nm aufgebracht;
der Arbeitsstoff ist auf ein poriges Material, z. B. Aluminium-Oxid oder Silikagel, aufgebracht;
■ als Arbeitsstoff werden elementare Metalle und Intermetallide benutzt, deren Deuteride zu den isostrukturellen Phasenumwandlungen mit Veränderung des Deuteriumgehalts bei Temperaturen höher als 350 K und einem Druck niedriger als 100 mPa fähig sind, z. B. Palladium, Vanadium, Niob, Seitenerdelemente, intermetallische Verbindungen TiFe, TiMn_{1,5}, LaNi₅, LaCo₅, in Form von Feinkristallpulver mit der Längenabmessung der Teilchen im Querschnitt von 10⁻¹² bis zu 10⁻⁹ m;
■ der pulverartige Arbeitsstoff ist mit einem porigen Material gemischt, z. B., mit Pulver von Aktivkohle mit einem Volumenanteil des Arbeitsstoffes von 10 % bis zu 90 %;
■ einige Schichten des Arbeitsstoffs, z. B. der Seltenerdelementen, sind so im Reaktor gelegen, dass die Temperaturen des dreiphasigen Gleichgewichts ihrer isostrukturellen Deuteriden mit der Gasphase bei demselben Druck dem radialen Temperaturgradienten im Reaktor in der Arbeitsflusscharakteristik entsprechen.

Das Wesen der Vorschläge, die sich auf den Arbeitsstoff beziehen, der einen unverzichtbaren konstruktiven Teil der Anlage gemäß der Erfindung bildet, wird unten erklärt.

Damit der Wärmeträger zu praktischen Zwecken wirksam genutzt werden kann, falls seine Temperatur genügend hoch (nicht weniger 80 - 100°C) ist, und der Gasdruck im Reaktor für die Arbeitssicherheit nicht hoch sein muss, werden die Arbeitsmetalle und ihre Arbeitsparameter-so ausgewählt, dass sich die Temperaturen des dreiphasigen Gleichgewichts ihrer isostrukturellen Deuteride mit der Gasphase bei einer Temperatur höher 350 K bei einem Druck unter 100 MPa befinden.

Die Geschwindigkeit der Sättigung mit Deuterium und dementsprechend die Masse des Arbeitsstoffs, der den Phaseübergang in einer Zeiteinheit beteiligt ist, befindet sich in umgekehrter Quadrat-Abhängigkeit von der Schichtdichte, wobei die Diffusion durch diese Schicht erfolgt. Aus diesem Grund ist die Intensität der Freisetzung der überschüssigen Energie, die den Prozess der isostrukturellen Verwandlung begleitet, desto höher, je kleiner die Teilchen sind und je größer die spezifische Oberfläche des Arbeitsstoffs ist. Am wirksamsten ist die Nutzung von fein verteiltem Pulver des Arbeitsstoffs mit einem möglichst kleinen Umfang der Teilchen, wobei deren Kristallstruktur noch bewahrt ist. Für die meisten Metalle entspricht dies der Längenabmessung der Teilchen von etwa einigen Nanometern. Der Arbeitsstoff kann auch als Kristallschicht mit der Stärke von weniger als 100 nm auf eine Metallfolie aufgetragen werden, die auf das innere Rohr des Reaktors aufgewickelt ist. Der feine Film kann mit der elektrolytischen Methode oder als Pulverschicht aufgetragen werden. Es ist zulässig, einen Film mit einer ungleichmäßigen Stärke zu verwenden. Der Arbeitsstoff kann auch auf einen Pulverstoff auftragen werden, z. B. Aluminium-Oxyd (Al₂O₃) oder Silikagel. Dadurch wird während des Arbeitslaufs das Sintern des Arbeitsstoffs und eine Verkleinerung der Oberfläche verhindert.

Wegen des Vorhandenseins des radialen Gradienten der Temperatur im Reaktor dehnt sich der Prozess der Phaseumwandlung zeitlich aus, wodurch die Wirksamkeit der Energieumsetzung verringert wird. Für eine Prozessintensivierung können einige Schichten des Arbeitsstoffs verwendet werden. Die Schichten sind so, dass bei gleichem Druck die Temperaturen des dreiphasigen Gleichgewichts der isostrukturellen Deuteriden und der Gasphase dem radialen Temperaturgradienten im Reaktor während der Betriebsphase entsprechen. Als Beispiele solcher Metalle mit verschiedenen Temperaturen des Übergangs bei gleichem Druck dienen Seltenerdeelemente. Die Schichten dieser Metalle mit gleichen Molenanteilen werden mit einer Metallfolie oder einem Maschendraht aus Kupfer, Silber oder Stahl getrennt. Es ist auch möglich, Metallfolien mit Filmen aus verschiedenen Metallen zu verwenden, wobei diese Filme auf das innere Rohr des Reaktors so aufgewickelt sind, dass die Phasenübergange seiner Deuteriden beim Einstelldruck Im Reaktor dem radialen Temperaturgradienten im Reaktor annähernd entsprechen. Bei einer solchen Anordnung geschehen die Phaseumwandlungen der Deuteride in verschiedenen Zonen des Reaktors fast gleichzeitig, wodurch die erzeugte Leistung erhöht wird.

Für die Versorgung eines besseren Gaszugriffs zu den Teilchen des Arbeitsstoffs und der Verhinderung des Sinterns der Teilchen ist es zweckmäßig, den Arbeitsstoff mit einem porigen Material zu mischen, z. B. mit dem Pulver von Aktivkohle oder von Silikagel.

Zur Erwärmung und Temperaturregelung dienen folgende Merkmale:
■ die Wärmeerhitzer, die als Widerstandsöfen oder Induktionsöfen mit einem hochfrequenten elektromagnetischen Feld ausgebildet sind, sind in den Endteilen des inneren Rohrs des Reaktors mit der-Möglichkeit ihrer abwechselnden Einschaltung untergebracht;
■ die Wärmeerhitzer sind auf den Endteilen des äußeren Rohrs des Reaktors mit der Möglichkeit ihrer abwechselnden Einschaltung aufgestellt;
■ die Wärmeerhitzer sind durch einen Schirm mit niedriger Wärmeleitung, z. B. aus poriger Keramik, getrennt;
■ der Warmeerhrtzet ist mit einem System zur Fortbewegung längs der Längsachse des Reaktors versehen.

Das Wesen der Vorschläge für das System der Erwärmung und der Temperaturregelung besteht darin, dass eine schnelle Veränderung der Richtung des längsläufigen Temperaturgradienten im Reaktor ermöglicht wird. Dies bei einer bestimmten Temperatur im Reaktor oder durch einen vorbestimmten Zeitabstand. Auch im automatischen Betrieb werden zwei, abwechselnd eingeschaltete Wärmeerhitzer verwendet, die in den Endteilen des Reaktors gelegen sind. Ferner ist ein trennender Schirm zwischen den beiden Wärmeerhitzem vorhanden oder der Wärmeerhitzer wird längs der Reaktorsachse bewegt.

Das System zur Übertragung und Nutzung der freigesetzten Wärme hat folgende Merkmale und Vorteile:
■ der Wärmetauscher des Primärkreislaufs, der in Form zweier koaxialen, hermetisch durch Verschlüsse abgeschlossene Rohre ausgeführt ist, ist auf dem äußeren Rohr des Reaktors angebracht Er ist mit durchgehenden Stutzen versehen, die an dem Rohr mit dem Wärmeträger, z. B. mit Wasser, angeschlossen sind;
■ der Wärmetauscher des Primärkreislaufs ist in Form eines Rohrs ausgeführt, das an das innere Rohr des Reaktors anliegt und mit durchgehenden Stutzen versehen ist, die an dem Rohr mit dem Wärmeträger angeschlossen sind;
■ der Wärmetauscher des Primärkreislaufs ist mit einem schraubenförmigen Stromteiler des Wärmeträgers ausgestattet und besteht aus Metall, z. B. aus Stahl oder Kupfer;
■ die Anlage ist mit einem Mechanismus zur Regelung und Richtungsänderung des Stroms des Wärmeträgers im Wärmetauscher des Primärkreislaufs versehen, z. B. mit einer Reversierpumpe oder einem Drehschieber mit einem elektromagnetischen Schalter;
■ der Wärmetauscher des Primärkreislaufs ist mit einer Trennwand in seiner Mitte versehen. Jede seiner zwei Sektionen ist mit einem Stromteiler und einem durchgehenden Stutzen ausgerüstet, mit der Möglichkeit einer unabhängigen Zufuhr des Wärmeträgers;
• zwischen dem Reaktor und dem Wärmetauscher des Primärkreislaufs ist eine wärmeübertragende Buchse ist angeordnet, die z. B. aus Stahl oder Kupfer besteht;
■ die anliegenden Oberflächen des Reaktors, der wärmeübertragenden Buchse und des Wärmetauschers des Primärkreislaufs sind konisch ausgeführt und liegen mit einer Verspannung aneinander;
■ die wärmeübertragende Buchse ist hohl und die Höhlung ist zu 40 - 60 % des Hohlraums mit Schüttmaterial mit hoher Wärmeleitung gefüllt, z. B. mit Kugeln aus Kupfer oder Silber;
■ die hohle, wärmeübertragende Buchse ist aus einem unmagnetischen Material, z. B. aus Kupfer oder Aluminium gefertigt und mit den Elektromagneten ausgestattet, mit der Möglichkeit ihrer abwechselnden Einschaltung, um das Schüttmaterial, das aus ferromagnetischem Stoff, z. B. Stahlkugeln hergestellt ist, in Längsrichtung der Buchse zu bewegen;
die Anlage ist mit einem System zur Veränderung des Winkels versehen, wobei dieses System des Reaktors und der wärmeübertragenden Buchse in einer vertikalen Ebene bis zu 180° gewährleistet;
der Hohlraum der warmeübertragenden Büchse ist evakuiert;
■ die wärmeisolierende Hülle der Anlage ist als hohles Vakuumzylindergehäuse gefertigt, das den Reaktor, die Wärmeerhitzer und den Wärmetauscher des Primärkreislaufs umgibt. An den Stirnseiten des Reaktors ist ein Deckel aus Material mit niedriger Wärmeübertragung, z. B. aus poriger Keramik, angeordnet

Das Wesen der Vorschläge für das System zur Überführung und Ausnutzung der freigesetzten Wärme wird unten erklärt.

Der Wärmeübertragner des Primärkreislaufs gewährleistet einen wirksamen Austausch der freigesetzten Wärme durch einen unmittelbaren Kontakt mit dem Reaktor oder durch eine wärmeübertragende Buchse, einen schraubenförmigen Stromleiter des Wärmetägers und der Veränderung der Stromrichtung des Wärmeträgers von der weniger erwärmten Seite zur mehr erwärmten Seite.

Der Wärmeaustauscher kann mit einer Trennwand in zwei Teile geteilt sein. Bei der Führung eines intensiveren Stroms des Wärmeträgers durch jenen Teil, der den Reaktor abkühlt, wächst der Temperaturgradient im Reaktor, der unter Einschluss eines der Wärmeerhitzer entwickeit ist.

Die wärmeübertragende Buchse ist so ausgebildet, dass ein in der Richtung umkehrbarer längsläufiger Temperaturgradient im Reaktor erzielt wird. Dafür wird in der Buchse, die aus einem nicht magnetischen Metall hohl hergestellt ist, ein schüttfähiges ferromagnetisches Material untergebracht, z. B. Stahlkugeln. Bei der Bewegung des schüttfähigen Materials mit Hilfe der abwechselnd eingeschalteten Elektromagnete oder durch das Kippen der Buchse zusammen mit dem Reaktor zur Seite des abgeschalteten Erhitzers werden die Bedingungen für die schnelle Abkühlung des Arbeitsstoffs in diesem Teil des Reaktors geschaffen. Die andere Reaktorsseite, die vom Wärmetauscher durch einen Luftabstand von der hohlen Buchse isoliert ist (die außerdem vorher evakuiert werden kann), wird schnell erhitzt und desorbiert Deuterium. Nach einem Stopp bei einer bestimmten Temperatur, wobei die Temperatur des dreiphasigen Gleichgewichts von zwei isostrukturellen Deuteriden mit der Gasphase beim Arbeitsdruck in der heißen Zone des Reaktors übertritt, schaltet sich der andere Wärmeerhitzer ein, und das schüttfähige Material wird zur entgegengesetzten Seite der wärmeübertragenden Buchse versetzt.

Der Reaktor, die Wärmeerhitzer und der Wärmetauscher sind in einer wärmeisolierenden Hülle eingeschlossen, die aus einem hohlen Vakuumzylindergehäuse und einem Deckel aus poriger Keramik an den Stirnenden dieses Gehäuses besteht, wodurch ermöglicht wird, die Verluste der Wärme und der Elektroenergie zu vermindem. Die Rohre mit dem Wärmeträger werden auch zweckmäßigerweise mit einer wärmeisolierenden Hülle abgedeckt.

Die Erfindung wird anhand von verschiedenen in den Zeichnungen erläuternden Ausführungsvarianten beschrieben.

### Kurzfassung der Zeichnungen:

In den **Fig. 1** und **2** sind Varianten der Anlage gezeigt, bei denen die Wärmeerhitzer an den Endteilen des inneren Rohrs des Reaktors angeordnet sind und ein Wärmetauscher auf dem äußeren Rohr des Reaktors angebracht ist.

In **Fig. 3** ist eine Anlage gezeigt, an dem die Wärmeerhitzer in den Endteilen des äußeren Rohrs des Reaktors liegen und der Wärmetauscher im inneren Rohr des Reaktors liegt.

In **Fig. 4** ist ein allgemeines Schema einer Einrichtung gezeigt, die die Anlage gemäß der Erfindung und den Betrieb der Anlage gewährleistende Hilfssysteme umfasst.

In **Fig. 5** ist ein prinzipielles Schema des Messblocks eines Kalorimeters mit den darin angeordneten Zellen gezeigt, in der die Messung der Freisetzung der überschüssigen Wärme durchgeführt wurde.

In **Fig. 6** ist die Abhängigkeit des Thermostroms, der vom Kalorimeter registriert wird, von der Leistung des elektrischen Impulses gezeigt, wobei der Impuls auf den Warmeerhitzer für das Palladium-Hydrid gebracht wird.

In **Fig. 7** ist die Abhängigkeit der Wärme, die vom Kalorimeter gemessen wird, von der Wärme, die sich auf dem Wärmeerhitzer freisetzt, für die Zelle mit dem Palladium-Hydrid gezeigt

In **Fig. 8** ist die Abhängigkeit des thermischen Stroms, der vom Kalorimeter registriert wird, von der Leistung des elektrischen Impulses, der auf den Wärmeerhitzer gegeben wird, für Palladium-Deuterid gezeigt.

In **Fig. 9** ist die Abhängigkeit der Wärme, die vom Kalorimeter gemessen wird, von der Wärme, die vom Wärmeerhitzer freigesetzt, für die Zelle mit Palladium-Deuterid gezeigt.

### Beispiele zur Verwirklichung der Erfindung

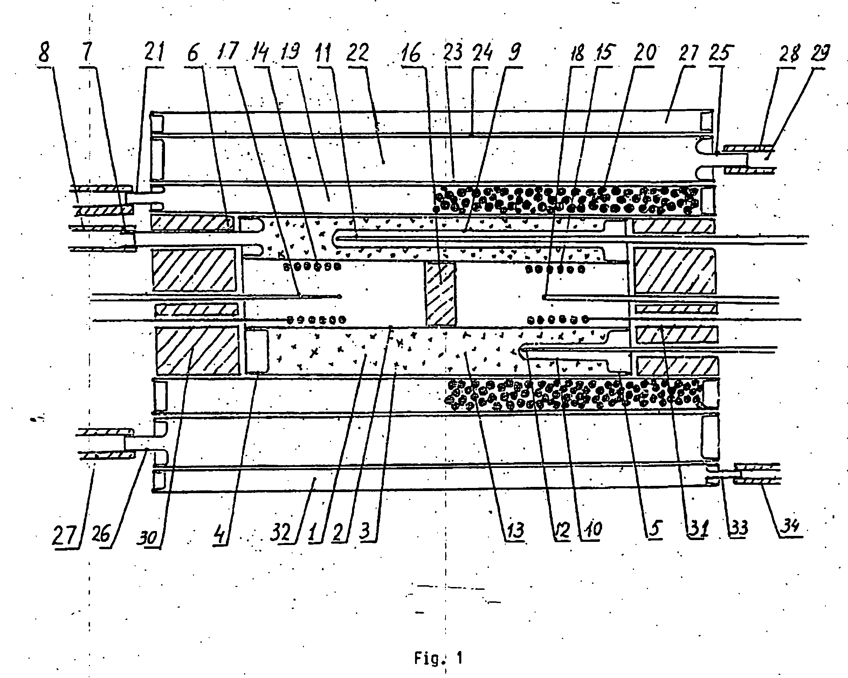

Die Anlage, die von der Gesamtheit der Merkmale charakterisiert wird, die in Patentansprüchen der Erfindung wiedergegeben sind, kann in verschiedenen konstruktiven Varianten gefertigt werden, von denen drei unten beschrieben und in Fig. 1, 2 und 3 gezeigt werden.

In Fig. 1 ist der Reaktor 1 ist als zwei koaxiale (gleichachsig gelegene) Rohre ausgebildet, und zwar ein inneres Rohr 2 und äußeres Rohr 3, die fest mit Verschlüssen 4 und 5 verbunden sind. Der Querschnitt der Rohre 2 und 3 kann verschiedene Formen haben, aber am vorteilhaftesten sind für die Herstellung und die Ausbeutung Rohre mit einem runden Querschnitt. Die Rohre 2 und 3 und die Verschlüsse 4 und 5 sind aus legierten Stahl hergestellt und ihre innere Oberfläche ist mit einem Stoff ausgekleidet, bei dem die Geschwindigkeit der Diffusion geringer als in Stahl ist, z. B. mit einer elektrolytisch abgelagerten Silberschicht und /oder einer silbernen Buchse, die dicht an den Rohrwänden anliegt. Die Verschlüsse 4 und 5 können als Enddeckel ausgebildet sein, die mit den Stirnseiten der Rohre 2 und 3 durch Schweißen oder Löten fest verbunden sind, z. B. mit Lot, das Silber enthält und mit dem auch der Arbeitsraum ausgekleidet ist.

Der Verschluss 4 ist mit einem durchgehenden Stutzen 6 mit einem Filter 7 ausgerüstet, der für die Verlustverhinderung der kleinen kristallinischen Teilchen bei der Evakuierung vorgesehen ist. Er ist durch eine Hochdruckrohrleitung 8 mit einem System zur Messung und Regelung des Gasdrucks verbunden.

In dem einen Verschluss 5 in Fig. 1 gibt es Taschen 9 und 10, in denen Thermomessgeber 11 und 12 liegen, z. B. Thermoelemente angeordnet sind, wobei es möglich ist, diese in Längsrichtung fortzubewegen.

Der Verschluss 5 kann eine Schraubenverbindung mit dem äußeren Rohr 3 des Reaktors 1 aufweisen (in Fig. nicht gezeigt). Eine hermetische Abdichtung wird dabei durch eine Ringdichtung aus einem Metall, das unter Druck plastisch verformt wird, z. B. Kupfer, erreicht. Das innere Rohr 2 des Reaktors 1 hat bei dieser Konstruktion ein Sackende mit einer Stirnfläche. Der Verschluss 4 dieses Typs wird in Autosklaven verwendet und bietet einen Vorteil bei vielfachem Neuladen des Reaktors 1.

in den Reaktor 1 wird der Arbeitsstoff 13 unterbracht. In seinem Deuterid geschieht bei zyklischer Temperaturveränderung ein reversibler, isostruktureller Phasenübergang mit sprungartiger Veränderung des Deuteriumgehalts, z. B. Palladiums, Vanadiums, Niobs oder der Seltenerdmetalle.

In den Endteilen des Reaktors 1 liegen Wärmeerhitzer 14 und 15, mit der Möglichkeit ihrer abwechselnden Einschaltung und Ausschaltung bei einer bestimmten Temperatur im Reaktor 1 oder durch in einem vorbestimmten Zeitabstand, auch im automatischen Betrieb. Die Wärmeerhitzer 14 und 15 sind als Wiederstandsofen oder als Induktionserhitzer ausgebildet. Zwischen den Wärmeerhitzern 14 und 15 kann ein Schirm 16 aus einem Material mit niedriger Wärmeleitung, z. B. aus poriger Keramik, angeordnet werden. Der Wärmerhitzer 14 kann mit einem System zur Fortbewegung längs des inneren Rohrs 2 des Reaktors 1 versehen sein. Die Thermomessgeber 17 und 18, z.B. Thermoelemente, sind für die Temperaturregelung vorgesehen.

Eine wärmeübertragende Buchse 19 grenzt unmittelbar an das äußere Rohr 3 des Reaktors 1 an, was sich, z. B. durch einen Kegelsitz mit Anwendung eines Trockenschmierens, z. B. aus Graphit oder Molybdän-Disulphid verwirklichen lässt. Die Buchse 19 kann voll oder, wie in Fig. 1 gezeigt; hohl sein. Dabei ist der Hohlraum zu 40 - 60 % mit einem schüttfähigen Stoff 20 mit hoher Wärmeleitung gefüllt, z. B. mit Stahlkugeln. Bei der Bewegung des schüttfähigen Stoffs durch den Buchsenhohlraum kann eine schnelle Wärmeableitung und eine Abkühlung des entsprechenden Reaktorsteils erzielt werden. Die hohle Buchse 19 weist einen durchgehenden Stutzen 21 auf, über den der schüttfähige Stoff geladen wird und die Evakuierung erfolgt.

An der äußeren Seite der Buchse 19 liegt der Wärmetauscher 22 des Primärkreislaufs, der als zwei gleichachsig liegende fest verbundene Rohre 23 und 24 ausgebildet ist. Die Rohre 23 und 24 werden über durchgehende Stutzen 25, 26 versorgt und mit den Rohren 27 und 28 mit einem kühlenden Wärmeträger 29 verbunden. Innerhalb des Wärmetauschers 22 können schraubenförmige Stromteiler des Wärmeträgers 29 angeordnet sein (in Fig. 1 nicht gezeigt), wodurch eine effektive Erwärmung des Wärmeträgers 29 gewährleistet ist.

Für die Minderung des Wärmeverlusts ist die Anlage mit einer wärmeisolierenden Hülle versehen. Die Hülle besteht aus Deckeln 30 und 31, die aus einem Stoff mit niedriger Wärmeleitung, z. B. aus poriger Keramik, bestehen. Die Deckel liegen auf den Stirnseiten des Reaktors 1 und eines hohlen Gehäuses 32, das mit einem durchgehenden Stutzen 33 versehen ist Der Stutzen 33 ist mit einem Schlauch 34 verbunden. Das hohle Gehäuse 32 liegt an der Außenoberfläche des Wärmetauschers 22 des Primärkreislaufs an.

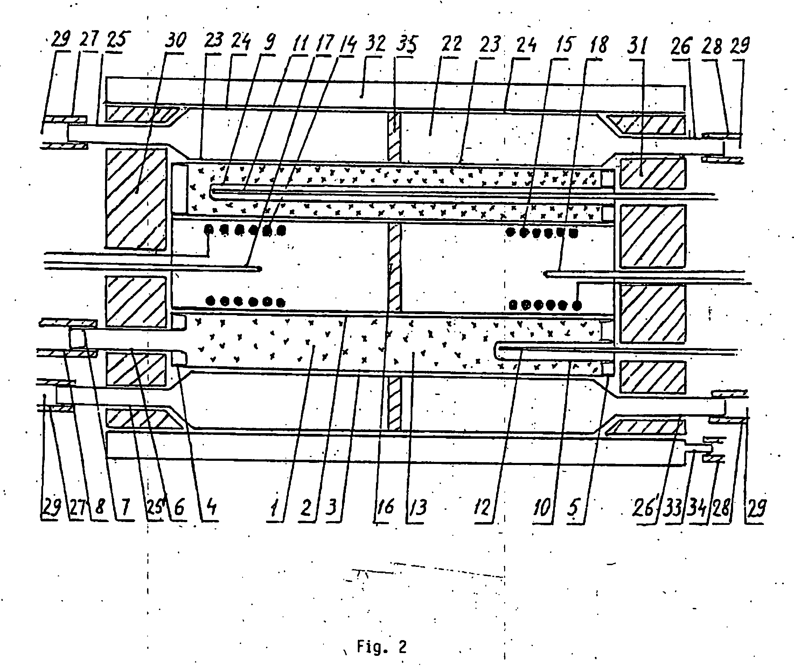

In **Fig. 2** ist eine Anlage dargestellt, in der die wärmeübertragende Buchse fehlt, und der Wärmetauscher 22 des Primärkreislaufs (hergestellt aus zwei koaxialen Rohren 23 und 24) ist unmittelbar auf einem Reaktor 1 aufgebaut und mit einer Trennwand 35 versehen. Jede seiner zwei Sektionen weist durchgehende Stutzen 25, 25¹, 26, 26¹, auf die mit Rohren 27 und 28, in denen der Wärmeträger 29 strömt, verbunden sind. In jeder Sektion sind Stromteiler für eine effektive Abkühlung des Reaktors 1 angeordnet (in Fig. nicht gezeigt). Die übrigen Bauteile sind denen analog, die anhand der Fig. 1 beschrieben worden sind.

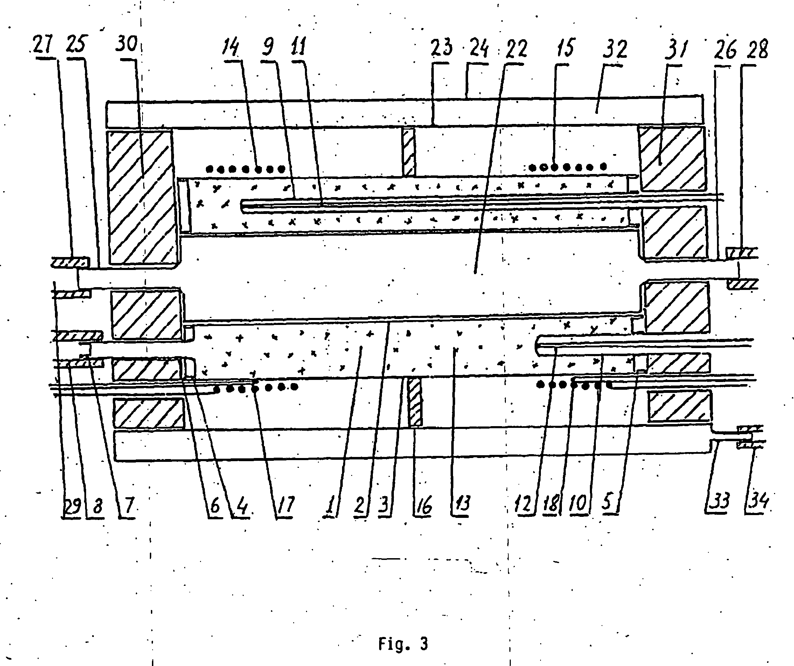

In **Fig. 3** ist eine Anlage dargestellt, in der die Wärmeerhitzer 14 und 15, der Schirm 16 und die Thermomessgeber 17 und 18 des Systems zur Temperaturregelung am äußeren Rohr 3 des Reaktors 1 angebracht sind. Der Wärmetauscher 22 des Primärkreislaufs ist als Rohr ausgebildet. Das Rohr ist mit durchgehenden Stutzen 25 und 26 versehen, die mit Rohren 27 und 28, die den Wärmeträger 29 führen, verbunden sind. Im Reaktor 1 sind die Stromteiler angesetzt (in Fig. nicht gezeigt). Die übrigen Bauteile sind denen analog, wie anhand der Fig. 1 beschrieben worden sind.

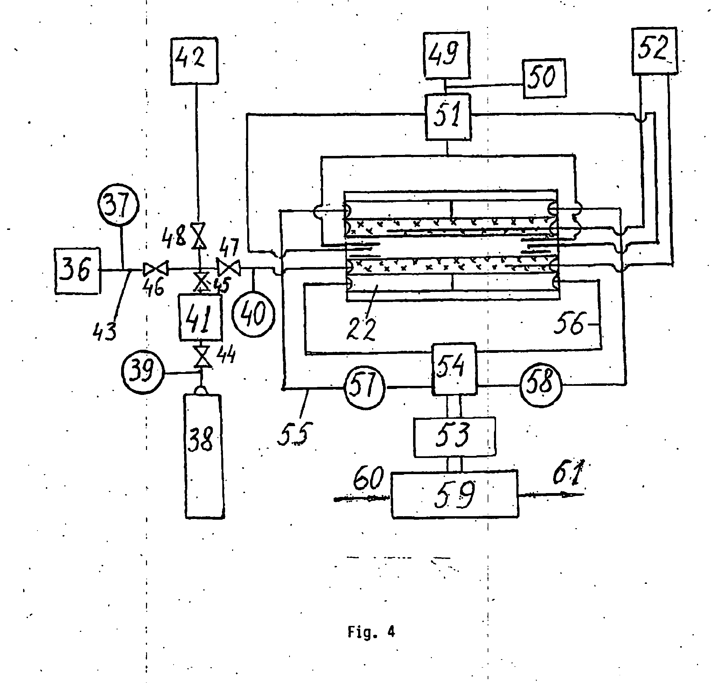

In **Fig. 4** ist ein allgemeines Schema der Anlage gemäß der Erfindung dargestellt, wobei die Anlage auch Hilfssysteme umfasst, die den Betrieb der Anlage gewährleisten.

Das System zur Druckregulierung im Reaktor 1 besteht aus einer Vakuumpumpe 36, einem Vakuummesser 37, einer Quelle 38 mit komprimieren Deuterium, Druckmessern 39 und 40, einem Receiver 41, einem Probeentnehmer 42, einer HochdruckRohrleitung 43 und Ventilen 44, 45, 46, 47 und 48.

Das System der Erwärmung und der Temperaturregulierung enthält eine Stromquelle 49 für die Wärmeerhitzer (14, 15 in Fig. 1, 2 und 3), einen Leistungsmesser 50, einen Temperaturregler 51 und einen Mehrkanal-Spannungsteller 52, die alle an die Thermomessgeber angeschlossen sind (10, 11 in Fig. 1, 2 und 3).

Das System zur Fortleitung und Ausnutzung der freigesetzten Wärme enthält den Wärmetauscher 22 der Primärkreislaufs, eine Hydraulikpumpe 53, einen Mechanismus zur Regelung und Veränderung der Stromrichtung eines Wärmeträgers 54, Rohre 55, 56, die den Wärmeträger 54 führen, Mengenmesser 57, 58, einen Wärmestauscher 59 des Sekundärkreislaufs, eine Leitung für den ankommenden Flüssigkeitsstrom 60 (z. B. Wasser) und eine Leitung für die erwärmte Flüssigkeit 61.

### Die Anlage arbeitet auf folgende Weise:

In den Reaktor 1 (Fig. 1, 2 und 3) wird der Arbeitsstoff 13 in Form eines feinen Kristallpulvers oder eines dünnen Films auf der Metallfolie eingebracht, die auf das Innenrohr aufgewickelt ist. Die Verschlüsse 4 und 5 werden fest geschlossen. Für die Anlage, die in den Figuren 1, 2 und 3 dargestellt sind, wird an die Stirnseiten des inneren Rohrs 3 des Reaktors 1 der Verschluss 4 als Deckel mit dem durchgehenden Stutzen und der Verschluss 5 als ein Deckel mit den Taschen 9 und 10 angeschweißt oder mit einem Silberlot angelötet. Für die Anlage nach Anspruch 4 wird der Verschluss mit einer Schraubenverbindung und einer Druckmutter angezogen, wobei die Kupferdichtung verformt wird. Eine derartige Konstruktion des Verschlusses ist üblich, z. B. in Autosklaven, und wird deshalb nicht extra abgebildet.

In den Stutzen 6 wird ein Filter 7 zur Verhinderung der Verluste von kleinen Pulverteilchen bei der Evakuierung eingebracht. Der Reaktor 1 wird durch den Stutzen 6 mit dem System zur Messung und Regulierung des Gasdrucks verbunden. Nach der Öffnung der Ventile 46 und 47 bei geschlossenen Ventilen 45 und 48 wird es mit der Vakuumpumpe 36 bis auf einen Druck entlüftet, der 1 Pa (10⁻² mm Quecksilbersäule) nicht überschreitet. Der Druck wird vom Vakuummesser 40 gemessen (Fig. 4). Nach der Schließung des Ventils 46 wird in den Reaktor 1 aus der Quelle 38 oder aus einer anderen Quelle beim Öffnen des Ventils 44 in kleinen Portionen dichtes Deuterium angeliefert, solange der Druck in der vorbestimmten Höhe konstant bleibt. Das Ventil 47 wird danach geschlossen. Die Thermomessgeber 17 und 18 werden an den Temperaturregler 51 und die Thermomessgeber 10 und 11 werden an den Spannungsteiler 52 angeschaltet (Fig. 4).

Der Wärmetauscher 22 des Primärkreislaufs wird mit den Rohren 27 und 28 verbunden, die den Wärmeträger 29, z. B. Wasser, führen und mit dem Wärmetauscher 59 des Sekundärkreislaufes verbunden sind (Fig. 4).

Der schüttfähige Stoff 20 mit hoher Wärmeleitung (z. B. Stahlkugellager) wird in eine Hälfte der wärmeübertragenden Buchse 19 geschüttet, z. B. durch Kippen nach rechts unten bezüglich der Horizontalebene oder durch Einsschaltung des rechten Elektromagneten (in Fig. nicht gezeigt). Für die Anlage in Fig. 2 wird mit dem Regulierungsgerät (54 in Fig. 4) der Hauptstrom des Wärmeträgers durch den rechten Teil des Wärmetauschers 22 durchgeleitet, wobei in seinem linken Teil ein kleiner Durchlass zur Vermeidung der Dampfansammlung gelassen wird.

Der elektrische Strom wird anfangs auf einen der Wärmeerhitzer geleitet. Mit dem Regler 51 wird die Temperatur des Wärmeerhitzers bis auf eine Höhe eingestellt, die nicht die Temperatur des dreiphasigen Gleichgewichts von zwei Deuteriden des gewählten Arbeitsstoffs mit gasförmigem Deuterium bei einem Im Reaktor 1 erzeugten und vom Manometer 40 angezeigten Druck (Fig.4) übersteigt. Der Wert dieser Temperatur wird nach dem aus [2] bekannten Diagramm bestimmt. Deuteridzusammensetzung,- Temperatur, Druck des gasförmigen Deuteriums für den verwendeten Arbeitsstoff (siehe das Patent [2]).

Nach einer Dauer über der Linie des genannten dreiphasigen Gleichgewichts (10¹ - 10³ Sekunden, von der Schichtdicke des Arbeitsstoffs abhängig) wird der Wärmeerhitzer 15 eingeschaltet und gleichzeitig der Wärmeerhitzer 14 abgeschaltet. Der schüttfähige Stoff 20 wird in die linke Hälfte der wärmeübertragenden Buchse 19 (Fig. 1) verbracht, und in der Anlage in Fig. 2 wird der intensivere Strom des Wärmeträgers zur linken Hälfte des Wärmetauschers 22 mit gleichzeitiger Verminderung des Stroms durch seine rechte Hälfte gerichtet.

In der Anlage der Figuren 1 und 3 ist das System zur Fortleitung und Ausnutzung der Wärme im Vergleich zu der gezeigten in Fig. 4 vereinfacht, und bei der Umschaltung des Wärmeerhitzers mit Hilfe des Regulierungsmechanismus (54 in Fig. 4) wird der Strom des Wärmeträgers zum Wärmetauscher 22 der Primärkreislaufs von der Seite, an der der Wärmeethitzer abgeschaltet ist, geleitet, so dass Bedingungen für eine schnellere Wärmeableitung vom gekühlten Reaktorsteil erzeugt werden.

Der beschriebene Zyklus wird vielfach im Laufe der ganzen Arbeitszeit der Anlage wiederholt. Die freigesetzte Wärme wird vom Wärmeträger aufgenommen und zum Wärmetauscher des Sekundärkreislaufs (59 in Fig. 4) geleitet, in dem die Wärme z. B. für die Wassererwärmung in einer Heizleitung verwendet werden kann.

Das im Laufe des langen Betriebs gestaute Gas, das Helium und Tritium enthält, kann in den Probenehmer 42 durch Öffnung der Ventile 47 und 48 bei geschlossenen Ventilen 45 und 46 (Fig. 4) gesammelt und dann in andere Behälter umgepumpt und von Deuterium abgetrennt werden.

### Beispiele der Messung der überschüssigen Wärme in einer Modellanlage

Für die Messung der überschüssigen Wärme in der Anlage mit der Nutzung von Palladium-Deuterid als Arbeitsstoff, wurde eine spezielle Methodik zum Vergleich der thermischen Effekte bei der Sorption - Desorption des Hydroagens in Palladium auf einem Standard-Abtastkalorimeter "SETARAM DSK-111" entwickelt.

In Anbetracht dessen, dass die Abmessungen der Arbeitskanäle des Kalorimeters (Länge = 140 mm, Durchmesser = 8 mm) klein sind und es technisch schwer ist, darin eine genaue Kopie des Reaktors gemäß der Erfindung darzustellen, wurde Versuche auf einer Modellanlage, an einer Modellampulle, an deren Endteilen die Wärmeerhitzer mit der Möglichkeit ihrer abwechselnden Einschaltung angeordnet sind, durchgeführt. Eine solche Konstruktion ermöglicht, die Richtung nach umkehrbaren Temperaturgradienten im Arbeitsstoff zu schaffen und gleichzeitig die Deuteriumdesorption am aufgewärmten Ampullenende und die Sorption an ihrem anderen Ende, an dem der Wärmeerhitzer abgeschaltet ist, zu verwirklichen. Als Wärmetäuscher des Primärkreislaufs wirkt ein Messblock eines Kalorimeters. In dieser Weise werden an diesem Modell die physisch-chemischen Prozesse, die in der Anlage gemäß der Erfindung erfolgen, vollständig wiedergegeben.

Im Folgenden wird die Methodik der Versuche beschrieben.

Die abgedichtete Stahlampulle mit dem Arbeitstoff mit einer Gesamtlänge von 80 mm und einem Durchmesser von 7,6 mm wird in den Messkanal des Kalorimeters gelegt. Die analoge Ampulle mit dem nach der Masse etwa gleichen Pulver aus feinkörnigem Palladium und mit etwas größerer Wärmekapazität wird in einen vergleichenden Kanal gleichmäßig eingebracht.

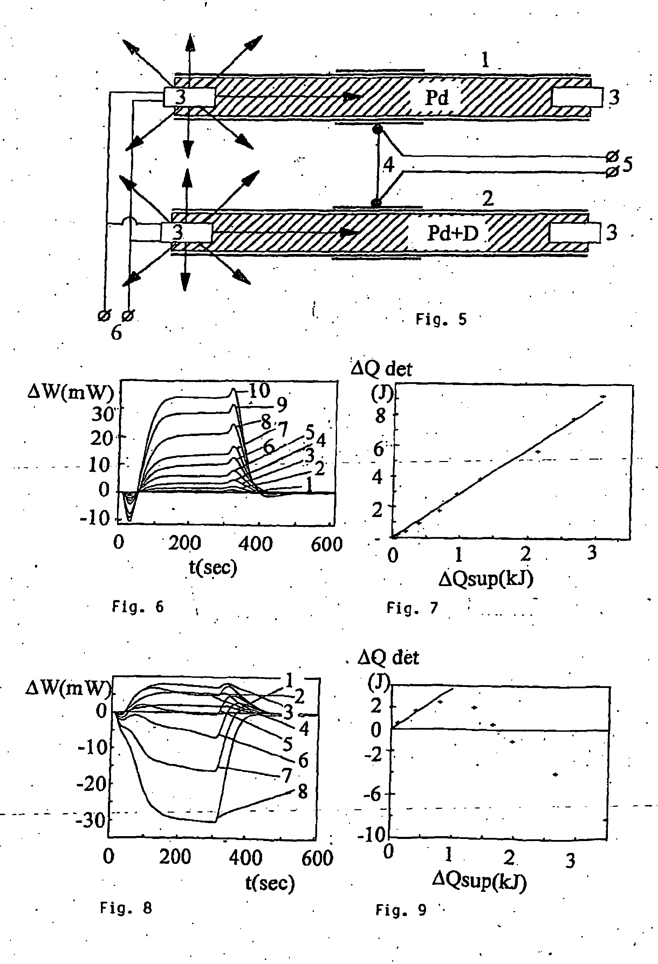

In **Fig. 5** ist das Messblockschema des Kalorimeters gezeigt, in dem
1. eine Vergleichszelle
2. eine Zelle mit Stoff
3. die Erhitzer an den Endseiten der Zelle
4. ein Kalorimetergeber (von Batterien der Thermoelemente)
5. ein Registrierblock der Kalorimeters und
6. eine Stromquelle für den Wärmeerhitzer
bedeuten.

Es wird das Erhitzen der linken Wärmeerhitzer 3 der Zellen gezeigt.

Das feinkörnige Palladium wurde durch Reduktion der Lösung von PdCl₂ mit Natriumformiat Na(HCOO)₂H₂O vorbereitet. Die Messungen auf einem elektronischen Abtastmikroskop JSM-35 haben gezeigt, dass die Größen der Pd-Teile von 100 - 800 nm betragen, wobei mehr als 70 % von ihnen 300 - 500 nm groß und der Form nach isometrisch waren..

Das Palladium-Deuterid β-PdDₓ wurde durch Sättigung der Palladiumfolie, 5 mkm dick (die Reinheit 99.9 %) bei der Elektrolyse des Schwerwassers (99,9 % D₂O), das 0,1 M LiOH (analysenreines Reagens) enthielt, bei einer Stromdichte ~ 50 mA/cm² im Laufe von 70 - 100 Stunden. Die Vollständigkeit des Übergangs in die β-Phase und die Zusammensetzung der letzten wurde mit der Gewichtmethode und röntgenographisch mit einem Diffraktohmether DRON-3 überwacht. Die Zusammensetzung des gewonnenen Deuterids entsprach PdD_{0.60±0.01}. Wegen der Nutzung von Lithium-Hydroxyd als kleine Beimischung tritt ein leichtes Isotop des Hydrogens mit dem Verhältnis H/D ~ 1 : 300. Analog wurde das Palladium-Hydrid vorbereitet, aber mit der Verwendung von doppelt abgetriebenen H₂O.

In die Messampulle wurden die dem Gewicht nach gleichen Mengen der Folie des Palladium-Deuterides (oder -Hydrides) ~0,3 g und des feinkörnigen Palladiums ~0,3 g eingegeben. Die Ampulle wurde abgedichtet und bei 650 K für eine Dauer von 30 Minuten belassen und dann während einer Dauer von 100 Minuten gekühlt. Dabei verlief die Desorption der Hydrögehisotope aus der Folie, und bei der Abkühlung verlief die Sorption auf feihkörnigem Palladium, das eine bedeutend große Oberfläche und Aktivität zur Sorption der Hydrogehisotope hat. Das Fehlen der Verluste von gasförmigen Hydrogenisotope wurde mit der Gewichtsmethode überwacht. Die Differentialkurve, die auf dem Kalorimeter gemessen wurde, hat gezeigt, dass die Sorption bzw. Desorption der Hydrogenisotope im Temperaturbereich 450 - 500 K verlief.

In den Taschen an den Ampullenden wurde die Wärmerhitzer aus Platindraht mit ungefähr dem gleichen Widerstand ~ 2,7 Ohm gesetzt. Auf die rechten und linken Ampullenerhitzer wurde eine Stromspeisung vom Konstantleistungsgenerator gepulst gegeben. Die vom Wärmeerhitzer freigesetzte Ohmsche Wärme wurde nach den Angaben des Voltmeters und des Amperemeters berechnet. Vor dem Anfang der Messungen wurden die Ampullen in den Kanälen einzeln so zentriert, dass die Thermoströme von gleichen elektrischen Impulsen der linken und rechten Wärmererhitzer gleich waren. Bei der konstanten Temperatur und ausgeschalteten Ampul~ lerhitzern ist das Kalorimetersignal konstant. Wenn die Messungen bei der erhöhten Temperatur durchführt wurden, sind die Temperaturen im Zentrum und an den Enden des Kanals, demnach auch der Ampulle, verschieden.

Der vom Kalorimeter gemessene Thermostrom bildete nur einen Teil des elektrischen Impulses zusammen: W = I • V • α, wobei I die Stromkraft, V die Spannung und α den Kalibrierkoeffizient bedeuten, der wie eine Funktion des Abstands zwischen dem Ampullerhitzer und dem Kalorimeterdetektor gemessen wurde.

Nach der Mittlung beider Ampullen, wurden ihre Wärmeerhitzer eingeschaltet. Bei der Stromeinschaltung maß das Kalorimeter den Signalunterschied zwischen den Mess-und Vergleichampullen. Die Messungen wurden bei einer bestimmten Anfangstemperatur auf folgende Weise durchgeführt. Bei konstantem Anfangsthermostrom wurden die Wärmeerhitzer für die Dauer von 300 Sekunden eingeschaltet. In der hundertsten und in der zweihundertsten Sekunde wurde der Strom und die Spannung gemessen, nach denen der thermische Impuls ausgelegt wurde. Nach 300 Sekunden wurden die Warmeerhitzer ausgeschaltet. Der thermische Strom kehrte in den Ausgangszustand während einer Dauer von 250 - 400 Sekunden (je nach der Impulsleistung) zurück. Dann wurden die Wärmeerhitzer auf der anderen Ampullenseite eingeschaltet, und das Verfahren wurde wiederholt. Nachdem der Strom wieder in den Ausgangszustand zurückkehrte, begann ein neuer Zyklus durch Ausschaltung der Wärmeerhitzer, aber die Spannung wurde um 50 % erhöht.

Acht Serien der Versuche wurden durchgeführt (Tabelle 1).

**Tabelle 1**

| Serien Nummer | Inhalt der Messampulle | T, K | Anzahl der Zyklen |
|---|---|---|---|
| 1 | Folie PdD_{0.6} (0.3 g) + Pulver Pd (0.3 g) | 440 | 9 |
| 2 | Folie PdD_{0.6} (0.3 g) + Pulver Pd (0.3 g) | 440 | 8 |
| 3 | Folie PdD_{0.6} (0.3 g) + Pulver Pd (0.3 g) | 520 | 9 |
| 4 | Folie Pd (0.3 g) + Pulver Pd (0.3 g) | 440 | 8 |
| 5 | Folie PdH_{0.6} (0.3 g) + Pulver Pd (0.3 g) | 440 | 10 |
| 6 | Folie PdH_{0.6} (0.3 g) + Pulver Pd (0.3 g) | 295 | 10 |
| 7 | Folie PdH_{0.6} (0.3 g) + Pulver Pd (0.3 g) | 440 | 10 |
| 8 | Folie PdH_{0.6} (0.3 g) + Pulver Pd (0.3 g) | 400 | 10 |

In **Fig.6** ist die Abhängigkeit des Signals gezeigt, das vom Kalorimeter registriert ist, für die Ampulle mit dem Palladium-Hydrid und der Impulsleistung, die auf die wärmeerhitzer für Serie 5 in den Versuchen 1 - 10 gegeben wird:
1 = 0,13 Watt; 2 = 0,28 Watt; 3 = 0,64 Watt; 4 = 1,30 Watt; 5 = 2,3 Watt;
6 = 3,2 Watt; 7 = 4,3 Watt; 8 = 7,1 Watt; 9 = 8,8 Watt; 10 = 10,2 Watt.

Wie zu ersehen ist, bewahrte das Signal seine Form und wuchs praktisch linear mit der Leistungsvergrößerung des Impulses (**Fig. 6 und 7**). Eine ähnliche lineare Abhängigkeit des Signals von der Größe der zugeführten Leistung des elektrischen impulses der Wärmeerhitzer wurde in Serien 4, 6-8 beobachtet

Ein ganz anderer Charakter der Abhängigkeit war bei der Verwendung des Palladium-Deuterids vorhanden. Als Beispiel werden die Ergebnisse der Serie 2 anführt. In **Fig. 8** ist die Abhängigkeit des Signals, das vom Kalorimeter registriert wird, von der Leistung des Elektroimpulses, der auf die Wärmeerhitzer in den Versuchen 1 - 8 gegeben wurde, gezeigt:
1 = 0,37 Watt; 2 = 1,33 Watt; 3 = 2,62 Watt; 4 = 4,5 Watt;
5 = 5,5 Watt; 6 = 6,5 Watt; 7 = 8,9 Watt; 8 = 11,6 Watt.

Bei der Leistungsvergrößerung des Elektroimpulses bis 3 Watt wuchs das gemessene Signal, aber bei der weiteren Leistungsvergrößerung verringerte sich das Signal und wechselte sogar das Vorzeichen. Die Abhängigkeit des Signals, das vom Kalorimeter registriert wurde, von der Leistung des Elektroimpulses, der auf die Wärmeerhitzer in den Versuchen 1-8 gegeben wurde ist in **Fig. 9** gezeigt. Die anomale Abhängigkeit der Signalgröße vom zugeführten Impuls wurde auf der Ampulle mit demselben Muster nach 2 Monaten und in den Versuchen mit einer Temperatur 440 K und 520 K festgestellt.

Die maximale Freisetzung der überschüssigen Energie, die festgestellt wurde, wird zu 10 Joule bewertet, wobei dieser Wert unter Berücksichtigung der Versuchsbedingungen (die Masse Pd = 0,3 g, t = 300 sek. und Koeffizient α ≈ 0,1) ∼ 1 Watt/g des Palladiumdeuterids entspricht. Dieser Wert der Betragreihenfolge nach entspricht den früheren theoretischen Einschätzungen der Geschwindigkeit der Kernreaktoren im Palladium-Deuterid [3], [4].

Bei der Verwendung von feinkörnigem Kristallpulver mit einer Größe der Teilchen 1 - 5 nm und bei der Geschwindigkeitsvergrößerung der Erwärmung und Abkühlung bis Sekundenzehnem kann die Energieerzeugung laut der theoretischen Einschätzung mindestens auf zwei Reihen, d. h. nicht weniger als bis zu 100 Watt auf 1 g Palladiums, vergrößert werden. Auf diese Weise kann im Reaktor mit einem Volumen von 1 Liter (1 dm³) und mit einer Masse des feinkörnigern Palladiums ∼ 1 Kilo eine erzeugte Leistung bis zu einigen Kilowattzehnem erreicht werden.

Die Verwendung der Anlage gemäß der Erfindung kann vielfältig sein.

Am einfachsten ist die Wassererwärmung zur Beheizung von Einzelhäusern, Treibhäusern, Schwimmbäder zu verwirklichen, d. h. dort, wo die Temperaturen unter 100°C ausreichen. Es ist auch möglich, eine Fernheizung der Siedlungen, Stadtbezirken von Stationen, die eine Serie solcher Anlagen einschließen, zu verwirklichen. Die Kosten der Elektroenergie für die Wassererwärmung werden dabei wesentlich herabgesetzt.

Im Unterschied zu den elektrochemischen Zellen ermöglicht die Anlage gemäß der Erfindung, den Wärmeträger bis auf Temperaturen von einigen hundert Celsiusgraden zu erwärmen, wodurch die prinzipielle Möglichkeit gegeben ist, Elektroenergie mit den bekannten Methoden zu produzieren, z. B. durch Verwendung eines Dampferzeugers, einer Turbine und eines elektrischen Generators. Auch direkte Methoden für die Transformation der thermischen Energie in elektrische Energie können verwendet werden. Die Anwendungsmöglichkeiten der Anlage für industrielle Zwecke werden bedeutend vergrößert.

Die Anlage ist betriebssicher, da die Deuteriumshauptmasse im verbundenen Zustand als Deuteride auftritt und der Arbeitsdruck bei kleinem Volumen von gasartigem Deuterium nur ein wenig den Luftdruck übertrifft. Da die Ausgangsstoffe (Deuterium) und die Endprodukte (Helium) nicht radioaktiv sind, ist die Anlage auch in ökologischer Beziehung nicht nur bei der gewöhnlichen Ausbeutung, sondern sogar bei einer Notzerstörung sicher.

Die Anwendung der Kernreaktionen der Fusion ermöglicht, für die Energieerzeugung praktisch unendliche Deuteriumsvorräte im Naturwasser zu verwenden. Bekanntlich ist 1 Liter gewöhnlichen Wassers nach der Energieausbeute darin enthaltenden Deuteriums bei der Kernreaktion der Energie gleichwertig, die bei der Verbrennung von mehr als 300 Liter des Erdöls freigesetzt wird. Die Technologie der Teilung der Isotope des Hydrogens ist bekannt. Die Gewinnung des Schwerwassers und des gasförmigen Deuteriums bringt keine wesentlichen Beiträge zum Preis der erhaltenen Energie. Der Preis dabei wird wesentlich niedriger als bei einer Energieherstellung mit traditionellen Methoden sein.

### Literaturverzeichnis

[1.] International Patent Application PCT/RU 93/00174, A1, MK 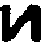 G21 B 1/00, G21 G 4/02, publication number WO 094/03902, 1994.
[2.] Patent of Russian Federation RU of Nº 2056656, C1, kl. G21G 4/02, G21B 1/00, Priorität 03.08.1992, veröffentlicht 20.03.1996, Bull. 8, Teil 2, Seite 267.
[3.] V. A. Kirkinskii, Yu. A. Novikov. Theoretical simulation of a cold nuclear fusion, Preprint. Novosibirsk, 48 p (1998) (in Russian).
[4.] V. A. Kirkinskii, Yu. A. Novikov, Europhysics Letters. 1999. V. 46, N. 4, p. 448 453.
[5.] V. A. Kirkinskii, Yu. A. Novikov. Theoretical modelling of cold fusion. - Novosibirsk: Novosibirsk State University, 2002, 105 p.

## Patentansprüche

1. Anlage zur Energieerzeugung, die einen hermetisch abschliessenden Reaktor (1) mit einem Arbeitsstoff (13), welcher zu reversiblen, isostrukturellen Phasenumwandlungen mit Veränderung des Deuteriumgehalts geeignet ist, und die ein System zur Gasdruck-Erzeugung. -Messung und -Regelung (36 - 48), ein System zur Erwärmung und Temperaturregelung (11, 12, 14, 15, 17, 18, 49 - 52) und ein System zur Übertragung und Nutzung der freigesetzten Wärme (22, 25 - 29, 53 - 61 ) aufweist, wobei der Wärmetauscher (22) Systems zur Übertragung und Nutzung der Wärme im Reaktor (1) an der zu den Wärmeerhitzern (14, 15) radial gegenüberliegenden Seiten angeordnet ist
**dadurch gekennzeichnet,**
**dass** der Reaktor (1) in Form von koaxial angeordneten Rohren (2, 3) ausgebildet ist, die mit Verschlüssen (4, 5) versehen sind, welche den Arbeitsraum zwischen den Rohren (2, 3) mit dem sich darin befindlichen Arbeitsstoff (13) hermetisch abschliessen, und
**dass** Wärmeerhitzer (14, 15) und Thermozellen (17, 18) des Systems zur Erwärmung und Temperaturregelung an den Endteilen der Rohre (2, 3) des Reaktors (1) ausserhalb des Arbeitsraums angeordnet sind, um einen umkehrbaren längsläufigen Temperaturgradienten im Reaktor (1) zu ergänzen.

2. Anlage nach Anspruch 1,
**dadurch gekennzeichnet,**
**dass** die Innenfläche der aus legiertem Stahl hergestellten Rohre (2, 3) des Reaktors (1) mit einem gegen das Eindringen von Wasserstoff beständigen Belag, z. B. einer elektrolytisch aufgetragenen Schicht aus Silber und/oder an den Rohren (2, 3) anliegenden Silberbuchsen ausgekleidet ist.

3. Anlage nach Anspruch 1,
**dadurch gekennzeichnet,**
**dass** die Verschlüsse (4, 5) der Rohre (2, 3) des Reaktors (1) fest zusammenfügen und mit Zusatzräume für die Einführung von Thermozellen (17, 18) in den Arbeitsraum und auch mit durchgehenden Stutzen für die Wiederbeladung mit Arbeitsstoff (13) und für die Verbindung mit dem Gas-Mess- und Regelsystem versehen sind.

4. Anlage nach Anspruch 1,
**dadurch gekennzeichnet,**
**dass** das innere Rohr (2) des Reaktors (1) mit einer Stirnfläche eines Sackendes versehen ist und der Verschluss (4) mit einer Dichtung und durchgehenden Verschlussptatte über ein Gewinde mit dem äußeren Rohr (3) des Reaktors (1) festgeschraubt ist.

5. Anlage nach Anspruch 1,
**dadurch gekennzeichnet,**
**dass** auf das innere Rohr (2) des Reaktors (1) eine vielschichtige Metallfolie aufgewickelt ist, z. B. aus Kupfer oder Silber, auf die der Arbeitsstoff (13) in Form eines Films von 1 nm bis zu 100 nm aufgetragen ist.

6. Anlage nach Anspruch 1,
**dadurch gekennzeichnet,**
**dass** der Arbeitsstoff (13) auf porigem Material, z. B. Alluminiumoxyd oder Silikagel aufgetragen ist.

7. Anlage nach Anspruch 1,
**dadurch gekennzeichnet,**
**dass** als Arbeitsstoff (13) elementare Metalle oder intermetallide verwendet sind, deren Deuteride sich zu reversiblen, isostrukturellen Phasenumwandlungen mit Veränderung des Deuteriumgehafts bei einer Temperatur über 350 K und einem Druck unter 100 MPa eignen, z. B. Palladium, Vanadium, Niob, Elemente der seltenen Erden und intermetallische Verbindungen TiFe, TiMn_{1.5}, LaNi₅, LaCo₅, ausgebildet in Form von feinem Kristallpulver mit linearen Querschnittsabmessungen der Teilchen von. 10⁻¹² m bis 10⁻⁹ m.

8. Anlage nach Anspruch 1 oder 7,
**dadurch gekennzeichnet,**
**dass** der pulverförmige Arbeitsstoff (13) mit porigem Material vermischt ist, z. B. mit dem Pulver von aktivierter Kohle, mit einem Volumengehalt des Arbeitsstoffs (13) von 10 % bis 90 %.

9. Anlage nach einem der Ansprüche 1, 5, 6, 7, 8,
**dadurch gekennzeichnet,**
**dass** einige Schichten des Arbeitsstoffs (13), z. B. Elemente der seltenen Erden, im Reaktor (1) so platziert sind, dass die Temperaturen des Dreiphasengleichgewichts ihrer isostrukturellen Deuteriden zusammen mit der Gasphase bei gleichem Druck dem radialen Temperaturgradienten im Reaktor (1) im Betriebszustand entsprechen.

10. Anlage nach Anspruch 1,
**dadurch gekennzeichnet,**
**dass** die Wärmeerhitzer (14, 15), ausgeführt als Widerstandsheizungen oder als Induktionsheizungen an den Endteilen des inneren Rohrs (2) des Reaktors (1) angeordnet sind, mit der Möglichkeit ihrer abwechselnden Einschaltung.

11. Anlage nach Anspruch 1,
**dadurch gekennzeichnet,**
**dass** die Wärmeerhitzer (14, 15) auf den Endteilen des äußeren Rohres (3) des Reaktors (1) angeordnet sind, mit der Möglichkeit ihrer abwechselnden Einschaltung.

12. Anlage nach Anspruch 1,
- **dadurch gekennzeichnet,**
**dass** die Wärmeerhitzer (14, 15) durch einen Schirm aus Material mit niedriger Wärmeleitfähigkeit, z. B. poriger Keramik, getrennt sind.

13. Anlage nach Anspruch 1.
**dadurch gekennzeichnet,**
**dass** der Wärmeerhitzer (14, 15) mit einem System für Fortbewegung längs der Längsachse des Reaktors (1) ausgestattet ist.

14. Anlage nach Anspruch 10,
**dadurch gekennzeichnet,**
**dass** der Wärmetauscher (22) des Primärkreislaufs, ausgeführt in Form zweier gleichachsiger, hermetisch durch Verschlüsse abgeschlossener Rohre (23, 24), auf dem äußeren Rohr (3) des Reaktors (1) angeordnet und mit durchgehenden Stutzen versehen ist, die an die Rohre (27, 28) angeschlossen sind, die die Wärmeträger (29), z. B. Wasser, führen.

15. Anlage nach Anspruch 1 oder 11,
**dadurch gekennzeichnet,**
**dass** der Wärmetauscher (22) des Primärkreislaufs in Form eines Rohres (23) ausgeführt ist, das an das innere Rohr (2) des Reaktors (1) anliegt und mit durchgehenden Stutzen (25) versehen ist, die an den Wärmeträger (29) führenden Rohre (27, 28) angeschlossen sind.

16. Anlage nach einem der Ansprüche 1, 14, 15,
**dadurch gekennzeichnet,**
**dass** der Wärmetauscher (22) des Primärkreislaufs mit einem schraubenförmigen Stromteiler des Wärmeträgers (29) ausgestattet ist, wobei der Stromteller aus Metall, z. B. aus Stahl oder Kupfer, besteht.

17. Anlage nach einem der Ansprüche 1, 14, 15,
**dadurch gekennzeichnet,**
**dass** sie mit einem Mechanismus zur Regelung und Veränderung der Stromrichtung des Wärmeträgers (29) im Wärmetauscher (22) des Primärkreislaufs versehen ist, z. B. mit einer umsteuerbaren, hydraulischen Pumpe oder einem Drehschieber mit elektromagnetischem Schalter.

18. Anlage nach einem der Ansprüche 1, 14, 15,
**dadurch gekennzeichnet,**
**dass** der Wärmetauscher (22) des Primärkreislaufs in seiner Mitte mit einer Trennwand versehen ist und jede seiner zwei Sektionen mit einem Stromteiler und durchgehenden Stutzen versehen ist, mit der Möglichkeit einer unabhängigen Zufuhr des Wärmeträgers.

19. Anlage nach Anspruch 1,
**dadurch gekennzeichnet,**
**dass** zwischen dem Reaktor (1) und dem Wärmetauscher (22) des Primärkreislaufs eine wärmeübertragende Buchse (19) angeordnet ist, die z. B. aus Stahl oder Kupfer besteht

20. Anlage nach Anspruch 1 oder 19,
**dadurch gekennzeichnet,**
**dass** anliegende Oberflächen des Reaktors (1), der wärmeübertragenden Buchse (19) und des Wärmetauschers (22) des Primärkreislaufs konisch ausgeführt sind und unter Spannung aneinander liegen.

21. Anlage nach einem der Ansprüche 1, 19, 20,
**dadurch gekennzeichnet,**
**dass** die wärmeübertragende Buchse (19) hohl ist und zu 40 - 60 % des Hohlraums mit Schüttmaterial hoher Leitfähigkeit ausgefüllt ist, z. B. mit Kugeln aus Kupfer oder Silber.

22. Anlage nach einem der Ansprüche 1 oder 21,
**dadurch gekennzeichnet,**
**dass** die hohle wärmeübertragende Buchse (19) aus nichtmagnetischem Material, z. B. Kupfer oder Aluminium, besteht und mit einem Elektromagneten versehen ist, mit der Möglichkeit, bei ihrer abwechselnden Einschaltung das Schüttmaterial, hergestellt aus ferromagnetischem Material, z. B. Stahlkugeln, in Längsrichtung der Buchse zu bewegen.

23. Anlage nach einem der Ansprüche 1 oder 21,
**dadurch gekennzeichnet,**
**dass** sie mit einem System zur Änderung des Winkels versehen ist, der die Drehung des Reaktors (1) und der wärmeübertragenden Buchse (19) in vertikaler Ebene bis zu 180° gewährleistet.

24. Anlage nach einem der Ansprüche 21 bis 23,
**dadurch gekennzeichnet,**
**dass** der Hohlraum der wärmeübertragenden Büchse (19) evakuiert ist.

25. Anlage nach Anspruch 1,
**dadurch gekennzeichnet,**
**dass** die wärmelsolierende Hülle in Form eines hohlen evakuierten Zylindergehäuses angefertigt ist, der den Reaktor (1), die Wärmeerhitzer (14, 15) und den Wärmetauscher (22) des Primärkreislaufs umgibt, und an den Stirnflächen des Reaktors (1) angeordnete Deckel aus Material mit niedriger Wäreleitfähigkeit, z. B. poriger Keramik, aufweist.

26. Anlage nach Anspruch 1,
**dadurch gekennzeichnet,**
**dass** der Reaktor (1) eine akustische Verbindung mit einem Ultraschallgenerator hat.

## Claims

1. An installation for generating energy, having an hermetically sealed reactor (1) with a working substance (13) suitable for a reversible, isostructural phase conversion with a change of the deuterium content, and a system for the generation, measurement and regulation of the gas pressure (36 to 48), a system for heating and temperature regulation (11, 12, 14, 15, 17, 18, 49 to 52), and a system for the transfer and utilization of the released heat (22, 26 to 29, 53 to 61), wherein the heat exchanger (22) of the system for the transfer and utilization of the heat is arranged in the reactor (1) on the sides radially opposite the heat generators (14, 15),
**characterized in that**
the reactor (1) is embodied in the form of coaxially arranged tubes (2, 3), which are provided with seals (4, 5), which hermetically seal the work space between the tubes (2, 3) containing the working substance (13), and
the heat generators (14, 15) and thermal cells (17, 18) of the system for heating and temperature regulation are arranged at the end sections of the tubes (2, 3) of the reactor (1) outside of the work chamber for complementing a reversible, longitudinal temperature gradient in the reactor (1).

2. The installation in accordance with claim 1,
**characterized in that**
the interior surface of the tubes (2, 3), which are made of steel alloy, of the reactor (1), are sheathed with a coating which is impervious to the entry of hydrogen, for example an electrolytically applied layer of silver, and/or silver bushings resting against the tubes (2, 3).

3. The installation in accordance with claim 1,
**characterized in that**
the seals (4, 5) fixedly join the tubes (2, 3) of the reactor (1) together and are provided with additional spaces for the introduction of thermal cells (17, 18) into the work space, and also with continuous connecting pieces for reloading with working substance (13) and for the connection with the gas measurement and regulation system.

4. The installation in accordance with claim 1,
**characterized in that**
the interior tube (2) of the reactor (1) is provided with a front face on a blind end, and the seal (4) with a seal and pass- through seal plate is fixedly screwed together via a threaded portion with the exterior tube (3) of the reactor (1).

5. The installation in accordance with claim 1,
**characterized in that**
a multi-layered metal foil, for example made of copper or silver, is wound onto the interior tube (2) of the reactor (1), to which the working substance (13) has been applied in the form of a film of 1 mm to 100 mm.

6. The installation in accordance with claim 1,
**characterized in that**
the working substance (13) is applied to porous material, for example aluminum oxide or silica gel.

7. The installation in accordance with claim 1,
**characterized in that**
elemental metals or intermetallides are used as the working material (13), whose deuterides are suitable for reversible, isostructural phase conversions with a change of deuterium content at a temperature above 350 K and a pressure below 100 MPs, for example palladium, vanadium, niobium, rare earth elements and intermetallic compounds TiFe, TiMn_{1.5}, LaNi₅, embodied in the form of a fine crystalline powder with linear cross-sectional dimensions of the particles of 10-12 m to 10-9 m.

8. The installation in accordance with claim 1 or 7,
**characterized in that**
the powdery working substance (13) is mixed with porous material, for example with a powder of activated charcoal, with a volume content of the working substance (13) of 10% to 90%.

9. The installation in accordance with one of claims 1, 5, 6, 7, 8,
**characterized in that**
some layers of the working substance (13), for example elements of the rare earths, are placed in the reactor (1) in such a way that the temperatures of the three-phase equilibrium of their isostructural deuterides, together with the gaseous phase, correspond under equal pressure to the radial temperature gradient in the reactor (1) in the operating state.

10. The installation in accordance with claim 1,
**characterized in that** the heat generators (14, 15), embodied as resistance heaters, are arranged at the end portions of the interior tube (2) of the reactor (1), with the possibility of their being switched on alternatively.

11. The installation in accordance with claim 1,
**characterized in that** the heat generators (14, 15) are arranged at the end portions of the exterior tube (3) of the reactor (1), with the possibility of their being switched on alternatively.

12. The installation in accordance with claim 1,
**characterized in that** the heat generators (14, 15) are separated by a screen of material of low heat conductibility, for example a porous ceramic material.

13. The installation in accordance with claim 1,
**characterized in that** the heat generator (14, 15) is equipped with a system for movement along the longitudinal axis of the reactor (1).

14. The installation in accordance with claim 10,
**characterized in that** the heat exchanger (22) of the primary circuit, embodied in the form of two coaxial tubes (23, 24), hermetically capped by seals, is arranged on the exterior tube (3) of the reactor (1) and is provided with continuous connecting pieces, which are connected to the tubes (27, 28) and which conduct the heat conductors (29), for example water.

15. The installation in accordance with claim 1 or 11,
**characterized in that** the heat exchanger (22) of the primary circuit is embodied in the form of a tube (23), which rests against the interior tube (2) of the reactor (1) and is provided with continuous connecting pieces (25), which are connected to tubes (27, 28) conducting the heat conductor (29).

16. The installation in accordance with one of claims 1, 14, 15,
**characterized in that** the heat exchanger (22) of the primary circuit is equipped with a screw-shaped current separator of the heat conductor (29), wherein the current separator consists of metal, for example steel or copper.

17. The installation in accordance with one of claims 1, 14, 15,
**characterized in that** it is provided with a mechanism for regulating and changing the flow direction of the heat conductor (29) in the heat exchanger (22) of the primary circuit, for example with a reversible hydraulic pump or a rotary slide valve with an electromagnetic switch.

18. The installation in accordance with one of claims 1, 14, 15,
**characterized in that** the heat exchanger (22) of the primary circuit is provided with a separating wall in its center and each one of its two sections is provided with a current separator and continuous connecting pieces, with the possibility of an independent supply of the heat conductor.

19. The installation in accordance with claim 1,
**characterized in that** a heat-transferring bushing (19), for example consisting of steel or copper, is arranged between the reactor (1) and the heat exchanger (22).

20. The installation in accordance with claim 1 or 19,
**characterized in that** contacting surfaces of the reactor (1), of the heat-transferring bushing (19) and of the heat exchanger (22) of the primary circuit are conically designed and rest against each other under tension.

21. The installation in accordance with one of claims 1, 19, 20,
**characterized in that** the heat-transferring bushing (19) is hollow and the hollow space is filled to 40 to 60% with a poured material of high conductivity, for example spheres of copper or silver.

22. The installation in accordance with one of claims 1 or 21,
**characterized in that**
the hollow heat-transferring bushing (19) consists of a non-magnetic material, for example copper or aluminum, and is provided with an electromagnet, with the possibility of moving the poured material, which is made of a ferro-magnetic material, for example steel spheres, in the longitudinal direction of the bushing in the course of its being alternatingly switched on.

23. The installation in accordance with one of claims 1 or 21,
**characterized in that** it is provided with a system for changing the angle which assures the rotation of the reactor (1) and the heat-transferring bushing (19) in the vertical plane up to 180°.

24. The installation in accordance with one of claims 21 to 23,
**characterized in that** the hollow space of the heat-transferring bushing (19) is evacuated.

25. The installation in accordance with claim 1,
**characterized in that** the heat-insulating envelope is fashioned in the form of a hollow, evacuated cylinder housing, which surrounds the reactor (1), the heat generators (14, 15) and the heat exchanger (22) of the primary circuit, and has covers of a material with low heat-conductibility, for example of a porous ceramic material, arranged on the front faces of the reactor (1).

26. The installation in accordance with claim 1,
**characterized in that** the reactor (1) has an acoustic connection with an ultrasound generator.

## Revendications

1. Installation de production d'énergie qui présente un réacteur (1) pouvant être fermé hermétiquement contenant une substance de travail (13) capable de transitions de phase isostructurelles réversibles accompagnées d'une modification de la teneur en deutérium, et qui présente un système de production, de mesure et de régulation de la pression de gaz (36 - 48), un système de chauffage et de régulation de la température (11, 12, 14, 15, 17, 18, 49 - 52) et un système de transfert et d'utilisation de la chaleur libérée (22, 25 - 29, 53 - 61), l'échangeur de chaleur (22) du système de transfert et d'utilisation de la chaleur étant disposé dans le réacteur (1) du côté radialement opposé aux réchauffeurs (14, 15),
**caractérisée en ce**
**que** le réacteur (1) est réalisé sous la forme de tubes (2, 3) disposés coaxialement, qui sont pourvus d'obturateurs (4, 5) qui ferment hermétiquement la chambre de travail entre les tubes (2, 3) avec la substance de travail (13) qui s'y trouve, et que des réchauffeurs (14, 15) et des thermocouples (17, 18) du système de chauffage et de régulation de température sont disposés sur les parties terminales des tubes (2, 3) du réacteur (1) à l'extérieur de la chambre de travail, pour compléter un gradient de température longitudinal réversible dans le réacteur (1).

2. Installation selon la revendication 1,
**caractérisée en ce**
**que** la surface intérieure des tubes (2, 3) réalisés en acier allié du réacteur (1) est recouverte d'un revêtement résistant à la pénétration d'hydrogène, par exemple d'une couche d'argent appliquée par électrolyse et/ou de bagues en argent en contact avec les tubes (2, 3).

3. Installation selon la revendication 1,
**caractérisée en ce**
**que** les obturateurs (4, 5) assemblent fermement les tubes (2, 3) du réacteur (1) et sont pourvus de chambres supplémentaires pour l'introduction de thermocouples (17, 18) dans la chambre de travail ainsi que de tubulures traversantes pour le rechargement en substance de travail (13) et pour la liaison avec le système de mesure et de régulation de gaz.

4. Installation selon la revendication 1,
**caractérisée en ce**
**que** le tube intérieur (2) du réacteur (1) est pourvu d'une face frontale d'un bout de sac et l'obturateur (4) est vissé avec un joint et une plaque de fermeture traversante au moyen d'un filetage sur le tube extérieur (3) du réacteur (1).

5. Installation selon la revendication 1,
**caractérisée en ce**
**qu'**une feuille métallique à plusieurs couches, par exemple en cuivre ou en argent, est enroulée sur le tube intérieur (2) du réacteur (1), sur laquelle la substance de travail (13) est appliquée sous la forme d'un film de 1 nm à 100 nm.

6. Installation selon la revendication 1,
**caractérisée en ce**
**que** la substance de travail (13) est appliquée sur un matériau poreux, par exemple de l'oxyde d'aluminium ou du gel de silice.

7. Installation selon la revendication 1,
**caractérisée en ce**
**que** l'on utilise comme substance de travail (13) des métaux élémentaires ou des composés intermétalliques dont les deutérures sont capables de transitions de phase isostructurelles réversibles accompagnées d'une modification de la teneur en deutérium à une température supérieure à 350 K et une pression inférieure à 100 MPa, par exemple du palladium, du vanadium, du niobium, des éléments des terres rares et des composés intermétalliques TiFe, TiMn_{1.5}, LaNi₅, LaCo₅, sous la forme d'une fine poudre cristalline avec des dimensions en coupe transversale linéaires des particules de 10⁻¹² m à 10⁻⁹ m.

8. Installation selon la revendication 1 ou 7,
**caractérisée en ce**
**que** la substance de travail (13) pulvérulente est mélangée avec un matériau poreux, par exemple avec de la poudre de charbon activé, avec une teneur en volume de la substance de travail (13) de 10 % à 90 %.

9. Installation selon une des revendications 1, 5, 6, 7, 8,
**caractérisée en ce**
**que** certaines couches de la substance de travail (13), par exemple des éléments des terres rares, sont placées dans le réacteur (1) de façon que les températures de l'équilibre des trois phases de leurs deutérures isostructurels avec la phase gazeuse correspondent, à la même pression, au gradient de température radial dans le réacteur (1) dans l'état de fonctionnement.

10. Installation selon la revendication 1,
**caractérisée en ce**
**que** les réchauffeurs (14, 15), réalisés sous la forme de dispositifs de chauffage par résistance ou de dispositifs de chauffage par induction, sont disposés sur les parties terminales du tube intérieur (2) du réacteur (1), avec la possibilité de leur activation alternée.

11. Installation selon la revendication 1,
**caractérisée en ce**
**que** les réchauffeurs (14, 15) sont disposés sur les parties terminales du tube extérieur (3) du réacteur (1), avec la possibilité de leur activation alternée.

12. Installation selon la revendication 1,
**caractérisée en ce**
**que** les réchauffeurs (14, 15) sont séparés par un écran en matériau à faible conductibilité thermique, par exemple en céramique poreuse.

13. Installation selon la revendication 1,
**caractérisée en ce**
**que** les réchauffeurs (14, 15) sont équipés d'un système pour le déplacement suivant l'axe longitudinal du réacteur (1).

14. Installation selon la revendication 10,
**caractérisée en ce**
**que** l'échangeur de chaleur (22) du circuit primaire, réalisé sous la forme de deux tubes (23, 24) de même axe, hermétiquement fermés par des obturateurs, est disposé sur le tube extérieur (3) du réacteur (1) et pourvu de tubulures traversantes qui sont raccordées aux tubes (27, 28) qui conduisent l'agent caloporteur (29), par exemple de l'eau.

15. Installation selon la revendication 1 ou 11,
**caractérisée en ce**
**que** l'échangeur de chaleur (22) du circuit primaire est réalisé sous la forme d'un tube (23) qui est en contact avec le tube intérieur (2) du réacteur (1) et pourvu de tubulures traversantes (25) qui sont raccordées aux tubes (27, 28) qui conduisent l'agent caloporteur (29).

16. Installation selon une des revendications 1, 14, 15,
**caractérisée en ce**
**que** l'échangeur de chaleur (22) du circuit primaire est équipé d'un diviseur de débit hélicoïdal de l'agent caloporteur (29), le diviseur de débit étant réalisé en métal, par exemple en acier ou en cuivre.

17. Installation selon une des revendications 1, 14, 15,
**caractérisée en ce**
**qu'**elle est pourvue d'un mécanisme de régulation et de modification du sens du courant de l'agent caloporteur (29) dans l'échangeur de chaleur (22) du circuit primaire, par exemple d'une pompe hydraulique réversible ou d'une vanne rotative avec commutateur électromagnétique.

18. Installation selon une des revendications 1, 14, 15,
**caractérisée en ce**
**que** l'échangeur de chaleur (22) du circuit primaire est pourvu en son centre d'une paroi de séparation et chacune de ses deux sections est pourvue d'un diviseur de débit et de tubulures traversantes, avec la possibilité d'une amenée indépendante de l'agent caloporteur.

19. Installation selon la revendication 1,
**caractérisée en ce**
**qu'**entre le réacteur (1) et l'échangeur de chaleur (22) du circuit primaire est disposée une bague caloporteuse (19) qui est par exemple en acier ou en cuivre.

20. Installation selon la revendication 1 ou 19,
**caractérisée en ce**
les surfaces en contact du réacteur (1), de la bague caloporteuse (19) et de l'échangeur de chaleur (22) du circuit primaire sont coniques et appliquées sous contrainte les unes contre les autres.

21. Installation selon une des revendications 1, 19, 20,
**caractérisée en ce**
**que** la bague caloporteuse (19) est creuse et remplie à 40 - 60 % de la cavité avec du matériau en vrac de conductibilité élevée, par exemple avec des billes en cuivre ou en argent.

22. Installation selon une des revendications 1 ou 21,
**caractérisée en ce**
**que** la bague caloporteuse (19) creuse est réalisée dans un matériau non magnétique, par exemple en cuivre ou en aluminium, et pourvue d'un électroaimant, avec la possibilité, lors de son activation alternée, de déplacer le matériau en vrac constitué de matériau ferromagnétique, par exemple de billes en acier, dans la direction longitudinale de la bague.

23. Installation selon une des revendications 1 ou 21,
**caractérisée en ce**
**qu'**elle est pourvue d'un système de modification d'angle, qui garantit la rotation du réacteur (1) et de la bague caloporteuse (19) jusqu'à 180° dans le plan vertical.

24. Installation selon une des revendications 21 à 23,
**caractérisée en ce**
**que** la cavité de la bague caloporteuse (19) est mise au vide.

25. Installation selon la revendication 1,
**caractérisée en ce**
l'enveloppe calorifuge est réalisée sous la forme d'un boîtier cylindrique creux mis au vide qui entoure le réacteur (1), les réchauffeurs (14, 15) et l'échangeur de chaleur (22) du circuit primaire, et présente des couvercles en matériau de faible conductibilité thermique, par exemple en céramique poreuse, disposés sur les faces frontales du réacteur (1).

26. Installation selon la revendication 1,
**caractérisée en ce**
**que** le réacteur (1) possède une liaison acoustique avec un générateur d'ultrasons.
